# FASCICULE DE BREVET EUROPEEN

(11) **EP 3 346 873 B1**
(45) Date de publication et mention de la délivrance du brevet: **08.11.2023**
(21) Numéro de dépôt: 16775793.9
(22) Date de dépôt: 06.09.2016
(51) Int. Cl.: A47B 33/00, A47B 96/18, F24C 7/06, F24C 7/04, F24C 15/10, C03C 10/00

(54) **PLAN DE TRAVAIL EN VITROCERAMIQUE**
GLASKERAMIKARBEITSPLATTE
GLASS CERAMIC WORKTOP

(30) Priorité: 08.09.2015 FR 1558342
(43) Date de publication de la demande: 18.07.2018
(73) Titulaire: Eurokera S.N.C., 02400 Château-Thierry (FR)
(72) Inventeur: DEBREYER, Grégory, 77140 Montcourt Fromonville (FR); DEMOL, Franck, 51100 Reims (FR); ROUX, Nicolas, 02400 Chateau-thierry (FR); VILATO, Pablo, 75014 Paris (FR)
(74) Mandataire: Saint-Gobain Recherche
(86) Numéro de dépôt international: PCT/FR2016/052212
(87) Numéro de publication internationale: WO 2017/042473

(56) Documents cités:
- WO-A1-2012/001300
- WO-A1-2012/059664
- WO-A1-2012/080672
- WO-A1-2015/136204

## Description

La présente invention concerne un plan de travail, ou table de travail ou comptoir ou meuble, formé d'au moins une plaque de grandes dimensions positionnée ou destinée à être positionnée horizontalement sur un ou des éléments supports (caisson d'un meuble, pied(s) support(s)) afin d'offrir une surface stable destinée à différents usages. En particulier, la présente invention concerne une table ou un meuble présentant une surface ou plateau (généralement horizontal(e) en position d'utilisation) apte à permettre en simultané ou successivement différentes activités et/ou support d'objets (cette surface ou plateau formant ainsi ce qu'on appelle un plan de travail), en particulier pouvant permettre la cuisson ou le réchauffage d'aliments dans des récipients appropriés et offrir d'autres usages.

Les matériaux habituellement utilisés pour réaliser des plans de travail sont par exemple le bois, le quartz, le Corian^{®}, etc. Pour la cuisson d'aliments, il existe par ailleurs des surfaces de cuisson de grandes dimensions dans les cuisines, en particulier à usage professionnel, ces plaques étant généralement métalliques et/ou composites. En particulier, il existe des panneaux multicouches, à base de couches ou matériaux céramiques tels que le grès, de couches ou matériaux métalliques de type aluminium et de couches ou matériaux plastiques isolants de type Bakélite, ces panneaux présentant généralement une épaisseur importante (de l'ordre de 12 mm par exemple) et étant de réalisation complexe.

Parallèlement, des plans de cuisson en matériaux de type vitrocéramique ou verre renforcé, de dimensions plus limitées (en particulier de surface généralement inférieure à 0.4 m², des plaques de surface supérieure pouvant être plus difficiles à obtenir par les procédés habituellement utilisés, et pouvant poser des problèmes en terme de planéité, manutention, etc), existent, pour des usages en particulier domestiques, l'utilisation de matériau vitrocéramique s'étant généralisé ces dernières années pour les plaques de cuisson, en raison notamment des performances de ce matériau pour cet usage et de l'aspect attractif des plaques réalisées.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques ainsi conçues sont destinées exclusivement à l'usage en tant que plaques de cuisson et ne sont traditionnellement pas destinées à recevoir d'autres objets que les ustensiles résistants à la chaleur utilisés pour la cuisson d'aliments, ni destinées à l'exercice d'autres activités que la cuisson d'aliments.

WO 2012/059664 A1, EUROKERA [FR], 10.05.2012 décrit un équipement mobilier comprenant un plan de travail en vitrocéramique d'aspect noir avec une transmission lumineuse inférieure à 5%, un élément de chauffage, des sources lumineuses munies de guide optique, et une interface de commandes.

La présente invention a cherché à élargir la gamme des produits d'équipement ménagers existants, à usage domestique ou professionnel, en mettant au point un nouveau type de produits interactifs permettant des usages plus variés.

Ce but a été atteint par le nouvel équipement ou article ou installation selon l'invention, avantageusement interactif, cet équipement mobilier/ménager (ou meuble) comprenant :
- au moins un plan (ou comptoir ou table) de travail formé d'au moins un substrat (en particulier plaque ou surface ou plateau) en (ou (à base) d'un ou essentiellement constituée d'un) matériau verrier (de préférence en vitrocéramique) monolithique (ou monobloc ou d'un seul tenant), avantageusement essentiellement plan, de surface (longueur par largeur de sa face de plus grandes dimensions) supérieure à 0.7 m², ledit substrat présentant une luminosité L* inférieure à 10, un flou inférieur à 30 %, et une transmission lumineuse T_{L} inférieure à 10%,
   - au moins un élément de chauffage (en particulier sous le substrat et caché par celui-ci lorsque cet élément de chauffage n'est pas en fonctionnement/est au repos),
- au moins une interface de communication avec au moins un élément du plan (par exemple avec le ou les éléments de chauffage), et/ou le cas échéant avec au moins un élément extérieur (hors du plan), par exemple avec un module (une unité, un dispositif) extérieur pour une communication sans fil,
ledit équipement étant en outre dénué de source(s) lumineuse(s) (ou à usage (exclusivement) d'éclairage).

Le produit mis au point selon l'invention répond au but recherché, la présente invention proposant ainsi un équipement nouveau interactif (permettant notamment l'activation de fonctions telles que la cuisson d'aliments) pouvant tout aussi bien être utilisé en cuisine que dans une autre pièce à vivre, le plan de travail pouvant faire partie d'un meuble plein ou non, d'une table, d'un comptoir, etc, ce plan de travail étant monté ou apte à être monté horizontalement sur (en particulier au sommet de) un ou des éléments supports (caisson d'un meuble, pied(s) support(s)) afin d'offrir une surface stable destinée à différents usages, le plan de travail ou l'équipement selon l'invention présentant une surface supérieure continue apte à permettre en simultané ou successivement des activités (telles que travail, jeux, lecture, etc.), le support d'objets (tels que papiers, ordinateurs, vases, vaisselle, etc.), et la préparation ou la cuisson ou le réchauffage d'aliments dans des récipients appropriés.

Plus généralement, l'invention concerne également un plan de travail formé d'au moins un substrat en matériau verrier monolithique de surface supérieure à 0.7 m², ledit substrat présentant une luminosité L* inférieure à 10, un flou inférieur à 30 %, et une transmission lumineuse T_{L} inférieure à 10%, ce plan de travail étant destiné à équiper un meuble ou équipement interactif multi-usages (destiné à plusieurs usages tels que listés au paragraphe précédent) tel que défini ci-avant selon l'invention.

L'invention concerne également l'utilisation d'un substrat, en particulier d'une plaque, en matériau verrier monolithique de surface supérieure à 0.7 m², ledit substrat présentant une luminosité L* inférieure à 10, un flou inférieur à 30 %, et une transmission lumineuse T_{L} inférieure à 10%, comme plan de travail interactif multi-usages tel que mentionné aux paragraphes ci-dessus.

Comme indiqué précédemment, le plan de travail est formé d'un substrat ou plaque en matériau verrier monolithique (le matériau verrier ayant été formé d'un seul bloc/en une seule pièce, même si le substrat peut le cas échéant présenter des évidements, généralement pratiqués dans la pièce déjà formée, à des fins esthétiques ou fonctionnelles) de grandes dimensions, l'avantage d'une telle plaque monolithique de grandes dimensions étant notamment d'offrir une surface majoritairement continue/uniforme/sans raccords, esthétique et d'entretien facile, ainsi qu'un plus grand confort d'utilisation et une plus grande sécurité (en matière d'étanchéité en cas de renversement de liquide, etc. ), etc. Le substrat consiste essentiellement, voire uniquement, en le matériau verrier, ce substrat/matériau verrier pouvant le cas échant être muni de revêtements de décoration ou fonctionnels de faible épaisseur (notamment de l'ordre de quelques dizaines de nanomètres à quelques centaines de microns, voire plus), par exemple en émail, peinture, couches minces, etc, comme précisé ultérieurement.

Contrairement à l'usage dans les vitrocéramiques notamment, ce (substrat en) matériau verrier est de grandes dimensions, sa surface (correspondant au produit de sa longueur par sa largeur pour sa face de plus grandes dimensions - généralement sa face supérieure, destinée à être apparente et à servir de support d'articles (ménagers ou de travail ou de cuisson) étant de dimensions supérieures à 0.7 m², de préférence supérieures à 0.9 m², notamment supérieures à 1 m², en particulier supérieures ou égales à 2 m². Or la fabrication de grandes plaques, dans le cas de la vitrocéramique notamment, pose de nombreux problèmes en matière de planéité et de manipulation. Dans la présente invention, une plaque de grandes dimensions, présentant pourtant une bonne planéité, peut néanmoins être avantageusement obtenue en réduisant la vitesse de passage (ou rallongeant l'arche de céramisation ou augmentant le temps de séjour dans l'arche) par rapport à la vitesse (ou à la longueur de l'arche ou au temps standards) habituellement utilisée pour obtenir des plaques vitrocéramiques de dimensions usuelles inférieures à 0.4 m², comme explicité ultérieurement dans le procédé selon l'invention.

Dans la présente invention, le substrat en matériau verrier forme ainsi avantageusement la majeure partie (au moins 50%), voire la totalité, du plan de travail ou de sa surface ou face destinée à servir à divers usages (généralement face supérieure en position d'utilisation). En particulier, le substrat en matériau verrier occupe avantageusement dans la présente invention au moins 50%, notamment au moins 70%, en particulier au moins 90% de la surface (mesurée généralement en face supérieure, destinée à être apparente et à servir de support d'articles) du plan de travail, et généralement il occupe toute la surface du plan de travail, la surface du plan de travail s'entendant comme la surface pleine occupée par le plan de travail (surface qu'il occupe en excluant celle(s) occupée(s) par des évidements éventuels (tel qu'un évidement dans le plan pour intégrer un évier)) sur la face considérée (généralement sa face supérieure, destinée à être apparente et à servir de support d'articles), voire s'entendant en particulier comme la surface globale correspondant au produit de la longueur du plan de travail par sa largeur). Selon le type de meuble (notamment dans le cas d'un meuble où le plan de travail occupe l'intégralité d'une de ses faces, généralement la face supérieure, par exemple une table, un îlot central ou un simple plan de travail), le substrat en matériau verrier peut ainsi occuper également au moins 50%, notamment au moins 70%, en particulier au moins 90% de la surface d'une face, en particulier de la face supérieure (en position d'utilisation), du meuble, voire occuper toute ladite surface.

Avantageusement, le substrat en matériau verrier forme au moins 50%, notamment au moins 70%, en particulier au moins 90%, voire la totalité, du plan de travail, ou en d'autres termes, le plan de travail (généralement en face supérieure ou formant la face supérieure du meuble) est principalement (à au moins 50%, notamment au moins 70%, en particulier au moins 90%), en particulier entièrement (ou uniquement) formé du (ou constitué du, ou consiste en le) substrat en matériau verrier (ce matériau verrier étant préférentiellement de la vitrocéramique).

Le substrat/matériau verrier selon l'invention est avantageusement plan (ou majoritairement ou quasiment plan), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 0,1% de la diagonale du substrat, et de préférence inférieure à 3 mm, notamment inférieure à 2 mm, en particulier inférieure à 1 mm, voire de l'ordre de zéro, en fonction de la taille/surface/diagonale du substrat, la planéité étant mesurée à l'aide d'un ondulomètre de référence SurFlat commercialisé par la société Visuol. Le substrat est généralement de forme géométrique, en particulier rectangulaire, voire carrée, voire circulaire ou ovale, etc, et présente généralement une face "supérieure" (face visible) en position d'utilisation, une autre face "inférieure" (généralement cachée, dans le châssis ou caisson du meuble incorporant le plan de travail) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés (ces formes ayant été ajoutées lors de la fabrication du substrat, par exemple par laminage ou effondrement ou pressage, etc., ou ayant été ajoutées en reprise), etc, ces variations de forme constituant avantageusement des variations continues de la plaque (sans changement de matériaux ou raccords). La face inférieure peut être notamment lisse ou munie de picots augmentant sa résistance mécanique et obtenus par exemple par laminage.

L'épaisseur du substrat en matériau verrier monolithique est généralement d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 10 mm.

Le matériau verrier du substrat utilisé est avantageusement résistant à haute température et/ou présente un coefficient de dilatation nul ou quasi-nul (par exemple inférieur à 15.10⁻⁷ K⁻¹), en particulier est avantageusement de la vitrocéramique ou un verre renforcé (notamment trempé chimiquement ou thermiquement). De préférence, le substrat est un substrat en vitrocéramique. Comme défini selon l'invention, le substrat/matériau verrier est avantageusement faiblement transmissif, peu diffusant et de couleur sombre (définie par la luminosité L*), en particulier de couleur noire ou brun foncé, ce matériau permettant en particulier un affichage par transmission lumineuse au travers du substrat, comme précisé ci-après.

La vitrocéramique utilisée peut être notamment de composition telle que décrite dans les demandes de brevets publiées sous les numéros suivants : WO2012156444, WO2012001300, DE202012011811, cette vitrocéramique étant en particulier une vitrocéramique d'aluminosilicate de lithium.

On utilise par exemple avantageusement une vitrocéramique comprenant les constituants suivants et/ou obtenue par céramisation à partir d'un verre de composition suivante, dans les limites ci-après exprimées en pourcentages pondéraux : SiO₂: 52 - 75 %; Al₂O₃ :18 - 27 %; Li₂O: 2,5 - 5,5 %; K₂O : 0 - 3 %; Na₂O : 0 - 3 %; :ZnO : 0 - 3,5 %; MgO : 0 - 3 %; CaO: 0 - 2,5%; BaO : 0 - 3,5 %; SrO : 0 - 2 %; TiO₂ :1,2 - 5,5 %; ZrO₂ : 0 - 3 %; P₂O₅: 0 - 8 %, et de préférence, dans les limites ci-après exprimées en pourcentages pondéraux : SiO₂ : 64 - 70 %; Al₂O₃: 18 - 21 %; Li₂O : 2,5 - 3,9 %; K₂O : 0 - 1,0 %; Na₂O : 0 - 1,0 %; ZnO : 1,2 - 2,8 %; MgO : 0,20 - 1,5 %; CaO : 0 - 1%; BaO: 0 - 3 %; SrO: 0 - 1,4 %; TiO₂ : 1,8 - 3,2 %; ZrO₂ : 1,0 - 2,5 %.

La vitrocéramique peut être affinée à l'arsenic (c'est-à-dire de (verre mère de) composition comprenant de l'ordre de 0.5 % à 1.5% en poids d'oxyde d'arsenic (exprimé en As₂O₃), ou peut être non affinée à l'arsenic (en particulier présentant un taux d'oxydes d'arsenic inférieur à 0.2 %, en particulier inférieur à 0.1%, voire nul) ou affinée à l'étain ou affinée au(x) sulfure(s), et peut être obtenue par laminage ou par flottage.

Le matériau verrier peut être également un verre trempé non céramisé, par exemple un aluminosilicate de lithium trempé tel que décrit dans les demandes de brevets publiées sous les numéros suivants : FR1060677, WO2012080672, ou dans la demande déposée en France sous le numéro 1363157, ou encore un verre trempé d'un autre type (sodo-calcique, borosilicate, etc), par exemple tel que décrit dans la demande publiée sous le numéro WO2012146860.

La vitrocéramique ou le verre trempé sont obtenus par les procédés respectifs décrits dans les documents précités en utilisant les cycles et températures de traitement permettant d'obtenir le matériau verrier présentant les caractéristiques sélectionnées données dans la définition de l'invention. Dans le cas des vitrocéramiques, ces procédés sont de préférence modifiés en réduisant la vitesse de passage d'au moins 25%, de préférence d'au moins 50%, ou en augmentant la longueur de l'arche de céramisation ou le temps de séjour dans ladite arche d'au moins 25%, de préférence d'au moins 50%, par rapport respectivement aux vitesses, longueurs et temps normalement utilisés, afin d'obtenir un substrat plan de grandes dimensions comme requis selon l'invention, comme explicité ultérieurement.

Comme défini selon l'invention, le substrat formant le plan de travail est sélectionné de façon à présenter une luminosité L* inférieure à 10, de préférence inférieure à 5, en particulier inférieure à 4, voire inférieure à 2, un flou inférieur à 30 %, en particulier inférieur à 28%, et une transmission lumineuse T_{L} inférieure à 10%, notamment inférieure ou égale à 5%, en particulier de 0,8% à 5%, cette transmission lumineuse étant préférentiellement non nulle (supérieure à 0%). Le substrat présente ces caractéristiques sur l'essentiel (en particulier sur au moins 80%, voire sur 100%) de sa surface, exception faite d'éventuels décors localisés (par exemple en émail) ou composants localisés appliqués à sa surface. Ces propriétés sont généralement celles du matériau verrier formant le substrat en lui-même, sans la présence d'un quelconque revêtement, mais le cas échéant peuvent résulter de la combinaison du matériau verrier et d'un revêtement appliqué sur l'essentiel de l'une et/ou l'autre de ses faces principales. Avantageusement, il s'agit des caractéristiques intrinsèques du substrat en matériau verrier, c'est-à-dire que ledit substrat en matériau verrier présente ces caractéristiques en lui-même sans la présence d'un quelconque revêtement.

La luminosité L* est une composante définie dans le système colorimétrique CIE et est évaluée de façon connue, à l'aide notamment d'un colorimètre Byk-Gardner Color Guide 45/0 (colorimétrie en réflexion) sur la face supérieure du substrat posé sur fond blanc opaque.

Le flou mesure le niveau de diffusion lumineuse et est défini, dans le cadre de l'invention, comme étant le rapport de la transmission diffuse sur la transmission totale à une longueur d'onde égale à 550 nm, ce flou étant évalué par exemple à l'aide du spectrophotomètre muni d'une sphère intégrante utilisé pour les mesures de transmission lumineuse.

La transmission lumineuse T_{L} est mesurée selon la norme ISO 9050 :2003 en utilisant l'illuminant D65, et est la transmission totale (intégrée dans le domaine du visible), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

Le substrat selon l'invention tel que défini ci-avant est en particulier d'aspect sombre, et est formé d'un matériau faiblement transmissif et peu diffusant, notamment est d'aspect noir ou brun, permettant notamment de signaler les zones de cuisson lorsqu'elles sont en état de marche, tout en masquant les éléments sous-jacents, en particulier au repos. Le matériau verrier utilisé présente également préférentiellement un indicateur (ou facteur ou coefficient) d'opacité Ω inférieur à 100, et avantageusement supérieur à 93, cet indicateur d'opacité dans la présente invention étant déterminé par la formule Ω = 100 - ΔE* et étant évalué en mesurant (colorimétrie en réflexion effectuée à l'aide d'un colorimètre Byk-Gardner Color Guide 45/0) la variation de couleur ΔE*, correspondant à la différence entre la couleur, mesurée en réflexion sur la face supérieure du substrat, pour le substrat posé sur fond noir opaque et celle pour le substrat posé sur fond blanc opaque (ΔE* = ((L_{N}*-L_{B}*)² + (a_{N}*-a_{B}*)² + (b_{N}*-b_{B}*)²)^{½}, L_{B}*,a_{B}*,b_{B}* étant les coordonnées colorimétriques de la première mesure sur fond blanc et L_{N}*,a_{N}*,b_{N}* étant celles de la seconde mesure sur fond noir dans le système colorimétrique établi en 1976 par la CIE).

Le substrat est de préférence à base d'une vitrocéramique noire comprenant généralement des cristaux de structure β-quartz au sein d'une phase vitreuse résiduelle, la valeur absolue de son coefficient de dilatation étant avantageusement inférieure ou égale à 15.10⁻⁷/°C, voire à 5.10⁻⁷/°C, et présentant les caractéristiques précédemment mentionnées, telle que la vitrocéramique des plaques commercialisées sous le nom Kerablack+ par la société Eurokera. En particulier, il peut s'agir d'une vitrocéramique affinée à l'arsenic de composition telle que décrite dans la demande de brevet EP0437228 ou US5070045 ou FR2657079, ou d'une vitrocéramique affinée à l'étain, présentant un taux d'oxydes d'arsenic inférieur à 0.2 % (voire inférieur à 0.1%, voire inférieur ou égal à 500 ppm, voire nul), par exemple de composition telle que décrite dans la demande de brevet WO 2012/156444, ou encore affinée au(x) sulfure(s) comme décrit dans la demande de brevet WO2008053110.

Le cas échéant, le substrat peut également comprendre des colorants, donnant par exemple certaines nuances ou teintes, à des taux de préférence inférieurs à 10% en poids, par exemple de l'oxyde de vanadium, de l'oxyde de fer, de l'oxyde de cobalt, de l'oxyde de cérium, de l'oxyde de sélénium, de l'oxyde de chrome, voire de l'oxyde de nickel, de l'oxyde de cuivre et/ou de l'oxyde de manganèse, etc..

Comme défini précédemment, l'article selon l'invention comprend également au moins un élément de chauffage (ou élément chauffant), par exemple un ou des foyers radiants ou halogènes ou un ou plusieurs brûleurs à gaz et/ou un ou plusieurs moyens de chauffage par induction, ces moyens de chauffage étant généralement situés sous le plan de travail et cachés par celui-ci au repos. Le plan de travail de l'article selon l'invention peut comporter un ou plusieurs éléments de chauffage, de même qu'un ou plusieurs feux. Par le terme « feu », on entend un emplacement de cuisson. L'article selon l'invention peut comporter plusieurs types d'éléments de chauffage ou feux (feux à gaz, feux radiants, halogènes ou à induction). De préférence, l'article selon l'invention comprend comme élément(s) de chauffage un ou plusieurs moyens de chauffage par induction.

Le ou les moyens de chauffage peuvent être localisés dans une zone définie (par exemple sur une extrémité du substrat) ou plusieurs zones du substrat, ou peuvent être uniformément répartis sous le substrat, occupant par exemple au moins 25% de la surface du substrat, voire peuvent occuper une surface quasi-équivalente à celle du substrat (par exemple plus de 50 %, notamment plus de 75%, voire plus de 85%, voire 100% de la surface principale du substrat), une pluralité d'inducteurs de petites dimensions tapissant par exemple le substrat sous sa face inférieure, pour permettre un chauffage au besoin dans n'importe quelle zone.

Les emplacements de cuisson sur le plan de travail, à l'aplomb des moyens de chauffage, peuvent être signalés (ou non, dans le cas par exemple d'un plan muni de moyens de chauffage couvrant l'ensemble de sa superficie), sur activation et/ou en permanence, notamment au moyen d'une décoration fixe, par exemple en émail. Les dimensions des motifs permettant de signaler les zones de cuisson (de même que celles de motifs pouvant signaler d'autres zones ou fonctions ou former des décors) peuvent être plus ou moins importantes, par exemple il peut s'agir de cercles délimitant chacun des éléments de chauffage, ou de petits motifs (triangles, croix, etc.) en leur centre ou à leur base, etc. L'absence de sources lumineuses, intégrées à l'équipement, pour signaler par exemple les zones de chauffe (celles-ci étant signalées au besoin par des motifs fixes dans la présente invention) ou pour éclairer des affichages ou faire d'autres effets lumineux, présente l'avantage d'être plus économique, de faciliter l'entretien de l'équipement, d'offrir une plus grande sécurité et simplicité de manipulation de l'équipement, ledit équipement étant généralement destiné à être utilisé dans des environnements déjà pourvus d'éclairages (naturels ou artificiels, tels qu'un salon, une terrasse, etc).

De préférence, les emplacements de cuisson (et/ou le cas échéant d'autres zones et/ou éléments et/ou fonctions et/ou décorations) sont ainsi signalés en permanence par un motif (notamment de type rond cercle, croix, triangle, rectangle, ou autre décor non géométrique, etc.) fixe, obtenu notamment par dépôt de couche(s) (en particulier telle(s) que celle(s) utilisée(s) pour la décoration de vitrocéramiques), par exemple en émail ou éventuellement peinture, à la surface de la plaque (notamment en face supérieure, ou éventuellement en face inférieure selon le type de revêtement).

Le cas échéant, une partie ou l'une des faces, en particulier la face supérieure (en position d'utilisation) ou apparente, de la plaque peut être munie d'un revêtement fonctionnel et/ou décoratif, par exemple opacifiant, en particulier d'un émail ou de couches minces, le taux de couverture dudit revêtement opacifiant dans la zone revêtue étant d'au moins 1%, notamment d'au moins 5%, de préférence d'au moins 20%, en particulier d'au moins 45%, voire de 100%.

Comme indiqué précédemment, l'équipement selon l'invention comporte également au moins une interface de communication avec au moins un élément du plan (tel que le ou les éléments de chauffage), et/ou avec un élément extérieur du plan, par exemple pour une communication sans fil.

Cette interface de communication (homme-machine ou machine-machine notamment) peut être un dispositif permettant notamment de commander ou transmettre les commandes aux éléments de chauffage, à partir de ou par l'intermédiaire de boutons ou touches de commande intégrées au plan de travail ou déportées sur un élément extérieur avantageusement amovible ou mobile, dans le cas notamment d'une commande par communication sans fil.

De préférence, l'interface permet la communication sans fil avec une unité extérieure au plan de travail (cette unité pouvant faire partie de l'équipement selon l'invention et pouvant elle-même constituer une interface), permettant par exemple l'activation à distance des zones chauffantes et/ou la commande de différentes fonctions (augmentation ou diminution de la puissance ou du temps de chauffe, etc), les commandes données par l'unité extérieure étant transmises par l'interface aux composants concernés de l'équipement. L'interface peut également être une interface de commande située au niveau du plan (bandeau de commande) transmettant les commandes par fils ou éventuellement sans fils à d'autres composants du plan ou hors du plan.

L'unité extérieure dans le cas d'une commande à distance peut être par exemple sous forme d'un clavier, d'une tablette ou d'un écran tactile, d'un téléphone mobile, cette unité pouvant être fixe (par exemple fixée sur un mur) ou mobile (pouvant le cas échéant être posée sur le plan de travail). Ce mode de réalisation présente notamment l'avantage d'éviter les traces de doigts (inesthétiques et visibles sur les matériaux verriers) sur le plan de travail ou les zones de cuisson. L'activation des commandes à distance permet également de réduire les risques de brûlures en évitant la manipulation des commandes à proximité des zones de cuisson. Dans un soucis de sécurité notamment, la communication sans fil peut être avantageusement prévue pour être de portée limitée (par exemple limitée au volume de la pièce dans laquelle l'équipement se trouve) et/ou munie de sécurités pour éviter l'activation par mégarde par une personne non présente. La communication sans fils s'effectue en particulier par ondes électromagnétiques ou radioélectriques, le cas échéant à l'aide de systèmes de type Bluetooth, WLAN, wifi, puce RFID, etc.

L'interface peut permettre de transmettre différents signaux initiés par contact ou même par mouvement pour activer différents composants (par exemple elle peut convertir un mouvement, détecté par des capteurs par triangulation, ces capteurs étant reliés à cette interface (et en faisant partie le cas échéant), en l'activation d'une fonction (par exemple l'augmentation de la puissance de chauffe, etc.).

Au moins une interface est généralement située sur ou sous le plan de travail ou à proximité. L'équipement selon l'invention peut également comprendre plusieurs interfaces, de même type ou différentes, permettant par exemple l'activation de différents éléments, ou l'équipement peut comprendre plusieurs interfaces, fonctionnant le cas échéant différemment (de constitution différente, opérant à différentes fréquences, etc.) pour piloter un même élément (par exemple une zone de chauffe) avec un niveau renforcé de sécurité. L'interface peut être formée de capteur(s), connecteur(s), élément(s) de commande, tout autre composant électrique ou électronique ou électromagnétique, etc. Un ou des moyens ou zones de commande (sous forme de touches, logos, voire claviers, etc.) ou indicateurs (d'intensités/de puissance, de temps, etc.), activables par exemple par contact sur la surface du plan ou à distance (notamment par communication sans fil), ou par simple mouvement de la main comme déjà évoqué (par capteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé (casserole, etc.) à un emplacement déterminé (telle qu'une zone de cuisson) de la plaque, peuvent être connectés à ou faire partie de la ou des interfaces.

Outre l'interface, l'équipement ou le plan de travail peuvent être munis de différents câbles, connecteurs ou autres éléments, notamment électriques contribuant à la transmission de commandes d'une partie à l'autre de l'équipement.

L'équipement, en particulier le plan de travail, selon l'invention peut également comporter divers revêtements fonctionnels et/ou décoratifs, notamment parmi ceux généralement utilisés avec les matériaux verriers concernés, par exemple à base d'émail, de peinture, de couche(s) mince(s) (par exemple métallique(s), diélectrique(s), etc.), etc. Par exemple, l'une des faces du substrat peut comporter une ou des couches ou un ou des motifs en émail, à but décoratif et/ou afin de signaler un ou des éléments (afficheurs, zones de cuisson, etc.), et/ou servant de masquage (pour éviter par exemple la vision directe des éléments placés sous le substrat, ce masquage n'étant cependant pas nécessaire avec les substrats sélectionnés selon l'invention), et/ou pour d'autres fonctions. En particulier, le plan de travail peut être muni d'une couche fonctionnelle lui conférant une ou des propriétés supplémentaires telles qu'anti-rayures, renforcement mécanique, anti-traces, anti-débordement, etc.. Le revêtement peut être effectué par exemple par des procédés tels que la sérigraphie, le dépôt par pulvérisation cathodique ou pneumatique, le jet d'encre ou d'émail, etc, le revêtement pouvant être appliqué notamment sur la face apparente ou sur la face opposée, selon le type de revêtement et la fonction recherchée. Par exemple, dans le cas d'un décor par émail, celui-ci est préférentiellement déposé en face supérieure pour des raisons de visibilité notamment, tandis qu'une couche opacifiante en peinture est préférentiellement déposée sur la face opposée non apparente pour une meilleure protection contre l'abrasion notamment, etc.

La présente invention concerne également un procédé de fabrication d'un équipement selon l'invention, en particulier du plan de travail dudit équipement, lorsque ce plan de travail est formé d'au moins un substrat en vitrocéramique de surface supérieure à 0.7 m², dans lequel on effectue au moins un cycle de céramisation d'une plaque de verre de surface supérieure à 0.7 m² pour obtenir ledit substrat, et selon lequel on réduit la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Alternativement au laminage, le verre peut être flotté, comme décrit par exemple dans la demande de brevet WO2008056080, avant d'être le cas échéant découpé. Les plaques, déjà découpées ou non, sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

Dans la présente invention, la vitrocéramique suit un cycle de céramisation lui donnant les propriétés recherchées, en particulier un aspect sombre/noir/brun, peu transmissif et peu diffusant.

D'autres détails et caractéristiques avantageuses ressortiront ci-après de la description d'un mode de réalisation non limitatif de l'invention en référence aux dessins annexés dans lesquels :
- La figure 1 représente une vue schématique en perspective d'un équipement selon l'invention;
- La figure 2 représente une vue schématique de dessus d'un équipement similaire (les ustensiles à la surface ou les éléments sous-jacents de meuble n'étant pas représentés);
- la figure 3 représente une vue schématique de côté dans laquelle un pan du meuble (23) a été enlevé pour laisser apparaitre certains composants de l'équipement.

Dans cet exemple l'équipement (1) selon l'invention comprend un meuble (2) formé d'un caisson (4) surmonté d'un plan de travail (5) formé d'au moins un substrat monolithique (6) en vitrocéramique de 3.8 m² de surface, ce substrat occupant la majorité (ici la totalité) de la surface (mesurée en face supérieure) du plan de travail. Ce substrat est par exemple une plaque du type de celle commercialisée sous la référence KeraBlack+ par la société Eurokera, cette plaque présentant une face supérieure lisse et une face inférieure munie de picots, et une épaisseur de 12 mm, et présentant une luminosité L* de 0.07, un flou de 0.3 %, une transmission lumineuse T_{L} de 0.15%, et un indicateur d'opacité de 99.4. Ce substrat est par exemple obtenu en procédant comme dans la demande de brevet WO2012156444 mais en réduisant la vitesse de passage dans l'arche de céramisation de 50%.

Alternativement, ce substrat peut être aussi par exemple une plaque de 4.2 m² en vitrocéramique du type de celle commercialisée sous la référence KeraVision par la société Eurokera, cette plaque présentant une face supérieure lisse et une face inférieure lisse, et une épaisseur de 4 mm, et présentant une luminosité L* de 0.6, un flou de 1.2%, une transmission lumineuse T_{L} de 4.2%, et un indicateur d'opacité de 95.92. Ce substrat est par exemple obtenu en procédant comme dans la demande de brevet WO2012001300 mais en réduisant la vitesse de passage dans l'arche de céramisation de 50%.

Le substrat utilisé présente une couleur noire (dans les deux cas précités). Dans les deux cas, le substrat en vitrocéramique obtenu présente une planéité de moins de 2 mm (la planéité obtenue étant entre 2 et 3 mm pour une vitesse réduite de 25% seulement, et étant de plus de 15 mm pour une vitesse inchangée par rapport à celle utilisée dans la demande précitée pour obtenir une plaque de dimensions standards inférieure à 0.4 m²), la planéité recherchée pour de bonnes propriétés optiques et de bonnes propriétés de couplage et rendement thermiques notamment, étant inférieure à 3 mm, de préférence inférieure à 2 mm.

L'équipement comprend en outre dans le présent exemple deux éléments de chauffage (7), par exemple des inducteurs, disposés sous la plaque (6). Ces inducteurs sont dans le cas présent vers le milieu de la surface de travail, mais pourraient tout aussi bien se trouver localisés à une extrémité du plan.

L'équipement comprend également des décors (9), par exemple en émail, destinés à signaler les emplacements de cuisson, et placés par exemple en face supérieure du substrat. Ces décors, sous forme par exemple de cercles de couleur (9) délimitant chaque emplacement (les couleurs pouvant le cas échéant être identiques ou différentes selon les emplacements) et entourant les inducteurs, permettent de signaler les emplacements de cuisson pour éviter leur contact lorsque les éléments de chauffage sont activés.

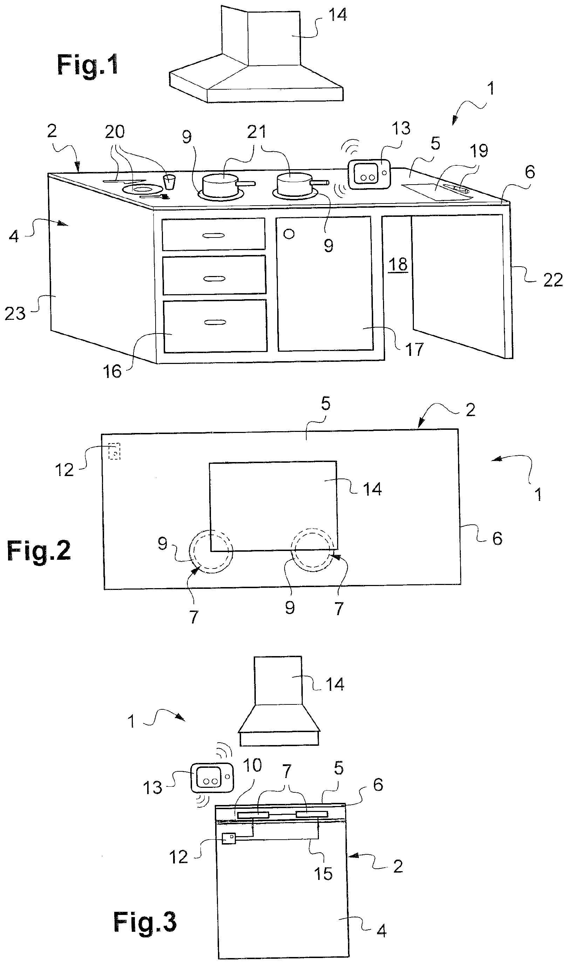

L'équipement comprend en outre au moins une interface de communication (12) (cachée par le substrat) avec les éléments de chauffage, cette interface communiquant également sans fils avec une unité extérieure sous forme, par exemple, d'une tablette tactile (13) pour l'activation de différentes zones et fonctions de la plaque ou de l'équipement. L'unité extérieure peut être avantageusement mobile et reposer sur le plan de travail (figure 1) ou servir pour l'activation à distance (figure 3) de différentes zones ou fonctions. Alternativement ou cumulativement, l'interface pourrait également comprendre ou être reliée à un bandeau de commande fixe situé en surface du substrat (2) pour l'activation de différentes zones et fonctions, en particulier du substrat.

Le cas échéant l'équipement peut être associé à ou comprendre également une hotte aspirante (14) surplombant le plan de travail. L'équipement comporte également d'autres éléments, notamment des câbles électriques (15) pour l'activation des éléments chauffants, et comporte des tiroirs (16) ou des placards (17) aménagés dans le caisson supportant le plan de travail, pour le rangement de divers articles, etc. L'équipement peut également comporter d'autres éléments, par exemple le plan de travail peut comporter un encadrement, le substrat peut être revêtu d'un décor permanent, localisé ou non, par exemple en émail, le caisson peut être plein ou comporter différents évidements (tel que l'évidement (18), ou intégrer d'autres éléments (par exemple un four encastré, etc.). Le plan de travail (5) peut servir pour différents usages, tels que l'écriture (comme symbolisée par le papier et le stylo (19)), le support d'objets (comme symbolisé par la vaisselle (20)) tout en permettant la cuisson d'aliments (comme symbolisé par les récipients de cuisson (21)), etc. Le cas échéant, le caisson peut également être remplacés par des pieds supports (par exemple uniquement les parois 22 et 23, ou quatre pieds au quatre coins, l'équipement sous le plan de travail dans ce cas étant préférentiellement caché par un coffrage localisé de quelques centimètres d'épaisseur sous le substrat) à l'image d'une table.

L'équipement selon l'invention peut notamment être utilisé avec avantages pour réaliser une nouvelle gamme de meubles multi-usages et interactifs intégrant notamment des zones ou une fonction de cuisson.

## Revendications

1. Equipement mobilier et/ou ménager, avantageusement interactif, comprenant :
- au moins un plan de travail formé d'au moins un substrat en matériau verrier monolithique de surface supérieure à 0.7 m² ledit substrat présentant une luminosité L* inférieure à 10, un flou inférieur à 30 %, et une transmission lumineuse TL inférieure à 10%,
- au moins un élément de chauffage,
- au moins une interface de communication avec au moins un élément du plan tel que le ou les éléments de chauffage, et/ou le cas échéant avec au moins un élément extérieur pour une communication sans fil, ledit équipement étant en outre dénué de source(s) lumineuse(s).

2. Equipement selon la revendication 1, **caractérisé en ce que** la surface du substrat en matériau verrier est supérieure à 0.9 m² notamment supérieure à m² en particulier d'au moins 2 m² l'épaisseur dudit substrat étant d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 10 mm.

3. Equipement selon l'une des revendications 1 ou 2, **caractérisé en ce que** le substrat en matériau verrier occupe au moins 50%, notamment au moins 70%, en particulier au moins 90% de la surface du plan de travail.

4. Equipement selon l'une des revendications 1 à 3, **caractérisé en ce que** le substrat est en verre trempé ou en vitrocéramique, et de préférence est en vitrocéramique.

5. Equipement selon l'une des revendications 1 à 4, **caractérisé en ce que** le substrat présente une planéité inférieure à 0,1% de la diagonale du substrat, et de préférence inférieure à 3 mm, notamment inférieure à 2 mm, en particulier inférieure à 1 mm, voire de l'ordre de zéro.

6. Equipement selon l'une des revendications 1 à 5, **caractérisé en ce que** le substrat présente une luminosité L* inférieure à 5, en particulier inférieure à 4, voire inférieure à 2, et/ou un flou inférieur à 28%, et/ou une transmission lumineuse TL inférieure ou égale à 5%, notamment de 0,8% à 5%, cette transmission lumineuse étant avantageusement non nulle, le substrat en matériau verrier présentant avantageusement ces caractéristiques de manière intrinsèque.

7. Equipement selon l'une des revendications 1 à 6, **caractérisé en ce que** le substrat ou le matériau verrier présente un indicateur d'opacité inférieur à 100, et préférentiellement supérieur à 93.

8. Equipement selon l'une des revendications 1 à 7, **caractérisé en ce que** l'équipement comprend comme élément(s) de chauffage un ou plusieurs moyens de chauffage par induction, le ou les éléments de chauffage pouvant être localisés dans une ou plusieurs zones du substrat, ou être uniformément répartis sous le substrat, occupant par exemple au moins 25% de la surface du substrat, ou occuper plus de 50 %, notamment plus de 75%, voire plus de 85%, de la surface du substrat.

9. Equipement selon l'une des revendications 1 à 8, **caractérisé en ce que** le plan de travail comprend des emplacements de cuisson, les emplacements de cuisson sur le plan de travail étant, à l'aplomb des moyens de chauffage, et **en ce que** les emplacements de cuisson et/ou d'autres zones et/ou éléments et/ou fonctions et/ou décorations, sont signalés au moyen d'une décoration fixe, par exemple en émail.

10. Equipement selon l'une des revendications 1 à 9, **caractérisé en ce qu'**au moins 5%, de préférence d'au moins 20%, en particulier d'au moins 45%, voire 100% d'au moins une zone de la face apparente du substrat est revêtue d'un revêtement opacifiant, en particulier d'un émail ou de couches minces.

11. Equipement selon l'une des revendications 1 à 10, **caractérisé en ce que** le ou les éléments de chauffage ou un ou des moyens ou zones de commande ou indicateurs sont activables par contact sur la surface du plan et/ou sur l'interface et/ou sur une unité extérieure, ou par mouvement, notamment de la main.

12. Equipement selon l'une des revendications 1 à 11, **caractérisé en ce que** l'interface permet la communication sans fil, en particulier avec une unité extérieure au plan de travail, permettant par exemple l'activation à distance des éléments de chauffage et/ou de moyens ou zones de commande ou indicateurs, l'unité extérieure étant par exemple sous forme d'un clavier, d'une tablette ou d'un écran tactile ou d'un téléphone mobile, cette unité pouvant être fixe ou mobile, la communication sans fil étant par exemple de portée limitée, par exemple limitée au volume de la pièce dans laquelle l'équipement se trouve.

13. Equipement selon l'une des revendications 1 à 12, **caractérisé en ce que** le plan de travail comprend un ou plusieurs revêtements fonctionnels et/ou décoratifs, par exemple à base d'émail ou de peinture ou de couche(s) mince(s).

14. Equipement selon l'une des revendications 1 à 13, **caractérisé en ce que** le plan de travail est monté, en particulier horizontalement, sur au moins un ou des éléments supports, tels qu'un caisson d'un meuble ou un ou des pieds supports, formant ainsi avec lesdits éléments supports une table, un meuble, plein ou non, ou un comptoir.

## Patentansprüche

1. Möbel- und/oder Haushaltseinrichtung, vorteilhafterweise interaktiv, umfassend:
- mindestens eine Arbeitsplatte, die aus mindestens einem Substrat aus monolithischem Glasmaterial mit einer Oberfläche größer als 0,7 m² gebildet ist, wobei das Substrat eine Helligkeit L* kleiner als 10, eine Unschärfe kleiner als 30 % und eine Lichtdurchlässigkeit TL kleiner als 10 % aufweist,
- mindestens ein Heizelement,
- mindestens eine Kommunikationsschnittstelle mit mindestens einem Element der Platte wie dem oder den Heizelement(en), und/oder gegebenenfalls mit mindestens einem externen Element für eine drahtlose Kommunikation, wobei die Einrichtung ferner frei von Lichtquellen ist.

2. Einrichtung nach Anspruch 1, **dadurch gekennzeichnet, dass** die Oberfläche des Substrats aus Glasmaterial größer als 0,9 m², besonders größer als m², insbesondere mindestens 2 m² ist, wobei die Dicke des Substrats mindestens 2 mm, besonders mindestens 2,5 mm beträgt, insbesondere in der Größenordnung von 3 bis 30 mm liegt und vorteilhafterweise kleiner als 15 mm ist, insbesondere in der Größenordnung von 3 bis 15 mm, besonders in der Größenordnung von 3 bis 10 mm liegt.

3. Einrichtung nach einem der Ansprüche 1 oder 2,
**dadurch gekennzeichnet, dass** das Substrat aus Glasmaterial mindestens 50 %, besonders mindestens 70 %, insbesondere mindestens 90 % der Oberfläche der Arbeitsplatte einnimmt.

4. Einrichtung nach einem der Ansprüche 1 bis 3,
**dadurch gekennzeichnet, dass** das Substrat aus thermisch vorgespanntem Glas oder aus Glaskeramik und vorzugsweise aus Glaskeramik besteht.

5. Einrichtung nach einem der Ansprüche 1 bis 4,
**dadurch gekennzeichnet, dass** das Substrat eine Flachheit kleiner als 0,1 % der Diagonalen des Substrats und vorzugsweise kleiner als 3 mm, besonders kleiner als 2 mm, insbesondere kleiner als 1 mm, sogar in der Größenordnung von Null, aufweist.

6. Einrichtung nach einem der Ansprüche 1 bis 5,
**dadurch gekennzeichnet, dass** das Substrat eine Helligkeit L* kleiner als 5, insbesondere kleiner als 4, sogar kleiner als 2, und/oder eine Unschärfe kleiner als 28 %, und/oder eine Lichtdurchlässigkeit TL kleiner oder gleich 5 %, besonders von 0,8 % bis 5 % aufweist, wobei diese Lichtdurchlässigkeit vorteilhafterweise nicht Null ist, wobei das Substrat aus Glasmaterial vorteilhafterweise diese Eigenschaften intrinsisch aufweist.

7. Einrichtung nach einem der Ansprüche 1 bis 6,
**dadurch gekennzeichnet, dass** das Substrat oder das Glasmaterial eine Opazitätskennziffer kleiner als 100 und vorzugsweise größer als 93 aufweist.

8. Einrichtung nach einem der Ansprüche 1 bis 7,
**dadurch gekennzeichnet, dass** die Einrichtung als Heizelement(e) ein oder mehrere Induktionsheizmittel umfasst, wobei das oder die Heizelemente in einem oder mehreren Bereichen des Substrats angeordnet oder unter dem Substrat gleichmäßig verteilt sein können, wobei sie beispielsweise mindestens 25 % der Oberfläche des Substrats einnehmen oder mehr als 50 %, besonders mehr als 75 %, sogar mehr als 85 % der Oberfläche des Substrats einnehmen.

9. Einrichtung nach einem der Ansprüche 1 bis 8,
**dadurch gekennzeichnet, dass** die Arbeitsplatte Kochstellen umfasst, wobei die Kochstellen auf der Arbeitsplatte genau über den Heizmitteln angeordnet sind, und dass die Kochstellen und/oder andere Bereiche und/oder Elemente und/oder Funktionen und/oder Dekorationen mittels einer festen Dekoration, beispielsweise aus Email, kenntlich gemacht sind.

10. Einrichtung nach einem der Ansprüche 1 bis 9,
**dadurch gekennzeichnet, dass** mindestens 5 %, vorzugsweise mindestens 20 %, insbesondere mindestens 45 %, sogar 100 % von mindestens einem Bereich der sichtbaren Seite des Substrats mit einer Trübungsmittelbeschichtung beschichtet ist, insbesondere aus Email oder dünnen Schichten.

11. Einrichtung nach einem der Ansprüche 1 bis 10,
**dadurch gekennzeichnet, dass** das oder die Heizelement(e) oder ein oder mehrere Bedienmittel oder -bereiche oder Anzeigen durch Kontakt auf die Oberfläche der Platte und/oder auf die Schnittstelle und/oder auf eine außen liegende Einheit oder durch Bewegung, besonders der Hand, aktivierbar sind.

12. Einrichtung nach einem der Ansprüche 1 bis 11,
**dadurch gekennzeichnet, dass** die Schnittstelle die drahtlose Kommunikation ermöglicht, insbesondere mit einer von der Arbeitsplatte außen liegenden Einheit, welche zum Beispiel die Aktivierung aus der Entfernung der Heizelemente und/oder Bedienmittel oder -bereiche oder Anzeigen ermöglicht, wobei die außen liegende Einheit zum Beispiel in Form eines Tastenfeldes, eines Tablets oder eines Touchscreens oder eines Mobiltelefons vorliegt, wobei diese Einheit fest oder beweglich sein kann, wobei die drahtlose Kommunikation zum Beispiel eine begrenzte Reichweite haben kann, zum Beispiel begrenzt auf das Volumen des Teils, in dem sich die Einrichtung befindet.

13. Einrichtung nach einem der Ansprüche 1 bis 12,
**dadurch gekennzeichnet, dass** die Arbeitsplatte eine oder mehrere Funktions- und/oder Zierbeschichtungen zum Beispiel auf der Basis von Email oder Farbe oder einer dünnen Schicht (dünner Schichten) umfasst.

14. Einrichtung nach einem der Ansprüche 1 bis 13,
**dadurch gekennzeichnet, dass** die Arbeitsplatte insbesondere horizontal auf mindestens einem Tragelement oder Tragelementen, wie einem Korpus eines Möbels oder einem Stützfuß oder Stützfüßen, angebracht ist, wodurch sie mit den Tragelementen einen Tisch, ein Möbel, massiv oder nicht, oder eine Theke bildet.

## Claims

1. An item of furniture and/or household equipment, advantageously interactive, comprising:
- at least one worktop formed of at least one substrate made of monolithic glass material with a surface area of greater than 0.7 m², said substrate exhibiting a luminosity L* of less than 10, a haze of less than 30%, and a light transmission TL of less than 10%,
- at least one heating element,
- at least one interface for communication with at least one element of the worktop such as the heating element(s), and/or if necessary with at least one external element for wireless communication, said item of equipment further being devoid of light source(s).

2. The item of equipment according to claim 1, **characterized in that** the surface area of the substrate made of glass material is greater than 0.9 m², in particular greater than m², in particular at least 2 m², the thickness of said substrate being at least 2 mm, in particular at least 2.5 mm, in particular is of the order of 3 to 30 mm, and advantageously is less than 15 mm, in particular is of the order of 3 to 15 mm, in particular of 3 to 10 mm.

3. The item of equipment according to one of claims 1 or 2,
**characterized in that** the substrate made of glass material occupies at least 50%, in particular at least 70%, in particular at least 90%, of the surface area of the worktop.

4. The item of equipment according to one of claims 1 to 3,
**characterized in that** the substrate is made of tempered glass or of glass-ceramic and is preferably made of glass-ceramic.

5. The item of equipment according to one of claims 1 to 4,
**characterized in that** the substrate exhibits a flatness of less than 0.1% of the diagonal of the substrate, and preferably of less than 3 mm, in particular of less than 2 mm, in particular of less than 1 mm, indeed even of the order of zero.

6. The item of equipment according to one of claims 1 to 5,
**characterized in that** the substrate exhibits a luminosity L* of less than 5, in particular less than 4, or even less than 2, and/or a haze of less than 28%, and/or a light transmission TL of less than or equal to 5%, in particular of 0.8% to 5%, this light transmission advantageously being non-zero, the substrate made of glass material advantageously exhibiting these characteristics intrinsically.

7. The item of equipment according to one of claims 1 to 6,
**characterized in that** the substrate or the glass material exhibits an opacity indicator of less than 100, and preferentially greater than 93.

8. The item of equipment according to one of claims 1 to 7,
**characterized in that** the item of equipment comprises, as heating element(s), one or more inductive heating means, it being possible for the heating element(s) to be located in one or more zones of the substrate or to be uniformly distributed under the substrate, for example occupying at least 25% of the surface area of the substrate, or to occupy more than 50%, in particular more than 75%, indeed even more than 85%, of the surface area of the substrate.

9. The item of equipment according to one of claims 1 to 8,
**characterized in that** said worktop comprises cooking locations, the cooking locations on the worktop being straight above the heating means, and **in that** the cooking locations and/or other zones and/or elements and/or functions and/or decorations are signaled by means of a fixed decoration, for example made of enamel.

10. The item of equipment according to one of claims 1 to 9,
**characterized in that** at least 5%, preferably at least 20%, in particular at least 45%, or even 100% of at least one zone of the visible face of the substrate is coated with an opacifying coating, in particular an enamel or thin layers.

11. The item of equipment according to one of claims 1 to 10,
**characterized in that** the heating element(s) or one or more control or indicator means or zones are capable of being activated by contact on the surface of the worktop and/or on the interface and/or on an external unit, or by movement, in particular of the hand.

12. The item of equipment according to one of claims 1 to 11,
**characterized in that** the interface allows wireless communication, in particular with a unit outside the worktop, for example enabling the remote activation of the heating elements and/or control or indicator means or zones, the external unit for example being in the form of a keyboard, a tablet or a touchscreen or a mobile telephone, this unit being able to be fixed or mobile, the wireless communication for example being of limited range, for example limited to the volume of the room wherein the equipment is located.

13. The item of equipment according to one of claims 1 to 12,
**characterized in that** the worktop comprises one or more functional and/or decorative coatings, based on enamel or on paint or on thin layer(s).

14. The item of equipment according to one of claims 1 to 13,
**characterized in that** the worktop is mounted, in particular horizontally, on at least one or more supporting elements, such as a casing of a piece of furniture or one or more supporting legs, thus forming, with said supporting elements, a table, an uninterrupted or interrupted piece of furniture, or a counter.
